# EUROPEAN PATENT APPLICATION

(11) **EP 3 575 585 A1**
(43) Date of publication of application: **04.12.2019**
(21) Application number: 19175770.7
(22) Date of filing: 21.05.2019
(51) Int. Cl.: F02M 21/02

(54) **INJECTOR**

(30) Priority: 29.05.2018 JP 2018102499
(71) Applicant: Nikki Co., Ltd., Kanagawa-ken 243-0801 (JP)
(72) Inventor: ENDO, Takayuki, Atsugi, Kanagawa 243-0801 (JP); MURAKAMI, Tsutomu, Atsugi, Kanagawa 243-0801 (JP)
(74) Representative: Boult Wade Tennant LLP

(57) **Abstract**

A valve body (21) of an on-off valve (2) is biased in a valve-closed direction by a coil spring (7), which is arranged in a stroking direction of the valve body (21), and a plurality of plate springs (6), which is provided at a right angle in the stroking direction of the valve body (21) and arranged in such a manner as to support the valve body (21), and keeps a valve-closed state when energization is not performed.

## Description

### BACKGROUND

### Technical Field

The present invention relates to an electromagnetically-driven injector that injects fuel at a flow rate required by an engine and, in particular, relates to a normally-closed injector in which a valve body of an on-off valve (fuel amount adjusting valve) is pushed to a valve seat by a spring load generated by elastic repulsion of a valve spring and secures sealability of when the valve is closed.

### Related Art

In a related art, an electromagnetically-driven injector that sucks a movable iron core by energizing and exciting an electromagnetic coil and opens an on-off valve has been used. An electric signal to actuate the on-off valve is set to an actuation signal of around 0.001 to 0.02 seconds. In order to accurately control fuel by repetition of extremely-short such actuation time, high responsiveness is required to a fuel injection valve itself. Also, recently, extremely high durability is required due to a need of a user for high quality.

Then, as a valve spring to close a valve body of an injector, there are what uses a coil spring inserted between a fixed iron core and a movable iron core, and what uses a thin plate-shaped plate spring an outer peripheral part of which is fixed, to a displaceable center of which a movable iron core and a valve body are fixed, and through which fuel can pass. For example, as disclosed in Japanese Utility Model Application Laid-Open No. 61-105756, since there is no lubricant in an injector that injects gas fuel such as natural gas (CNG) unlike an injector that injects liquid fuel, a structure using a plate spring that can be supported in a floating state and moved linearly without a sliding part has an advantage in durability and responsiveness.

However, in the injector having a configuration of biasing a valve body by a plate spring, although sealability of when a valve is closed is secured by a spring load by elastic repulsion of the plate spring, sealability of an on-off valve becomes insufficient by a decrease in the spring load due to a decrease in elastic repulsion of the plate spring by aged deterioration or the like of a material included in the plate spring, and a problem of fuel leakage of when the valve is closed becomes more likely to be generated.

Thus, an injector in which a coil spring is provided in a stroking direction of the valve body and in which it is made possible to secure a valve-closed state of the valve body for a long time by a spring load of a valve spring by keeping the valve-closed state by a double spring load of two springs, which are a plate spring and the coil spring, when a valve is closed has been disclosed in Japanese Patent Application Laid-Open No. 2009-91998.

Also, generally, to acquire an engine output identical to that in a case of liquid fuel, an injector that injects gas fuel needs a large fuel-passing sectional area compared to that of the liquid fuel. Thus, a displacement amount of a valve body becomes large. Thus, when a plate spring structure is used, an injector main body becomes large inevitably due to a stress applied to the plate spring. However, as disclosed in Japanese Patent Application Laid-Open No. 2008-144693, it is known that it is possible to prevent an increase in a size without losing an advantage of the plate spring structure when a valve body is supported in the middle of an on-off valve in a floating state and a coil spring is used as a return spring.

However, since the plate spring structure in the related art includes only one spring body, a valve body is supported by only one point at a central part and there is a tendency that actuation becomes unstable due to various kinds of disturbance. When local force is applied to a stopper rubber included in a movable iron core or a valve rubber included in the valve body when a valve is opened/closed, the stopper rubber or the valve rubber is worn unevenly, and a displacement amount of the valve body is increased and a stress applied to the plate spring is increased concomitantly. Thus, there is a problem that a situation that a function of the injector is damaged occurs.

### SUMMARY

The present invention is to solve the above problem and is to provide a normally-closed injector that physically controls an inclination during displacement of a valve body, prevents uneven wear of a stopper rubber, a valve rubber, or the like by stabilizing actuation, reduces a stress applied to a plate spring by solving an increase in a displacement amount of the valve body, and makes it possible to secure sealability of when a valve is closed for a long time without damaging responsiveness of the valve body. The present invention provides an electromagnetically-driven injector according to claim 1.

An injector that is the present invention to solve the problem is an electromagnetically-driven injector in which a valve body of an on-off valve is biased in a valve-closed direction by a coil spring, which is arranged in a stroking direction of the valve body, and a plate spring, which is provided at a right angle in the stroking direction of the valve body and arranged in such a manner as to support the valve body, and keeps a valve-closed state when energization is not performed, the plate spring including a plurality of plate springs arranged in the stroking direction of the valve body.

Also, in the present invention, since the plurality of plate springs is arranged at a predetermined distance from each other in the stroking direction of the valve body, a stress applied to each plate spring when the valve body is opened/closed can be securely and evenly distributed and reduced.

Moreover, in the present invention, in a case where the number of the plurality of plate springs is two, it is possible to produce an effect with a small number of parts and a simple configuration.

According to the present invention, it is possible to provide a normally-closed injector that can physically control an inclination during displacement of a valve body, prevent uneven wear of a stopper rubber, a valve rubber, or the like by stabilizing actuation, prevent a damage by solving an increase in a displacement amount of the valve body and reducing a stress applied to a plate spring, and secure sealability of when a valve is closed for a long time without damaging responsiveness of the valve body.

### BRIEF DESCRIPTION OF DRAWING

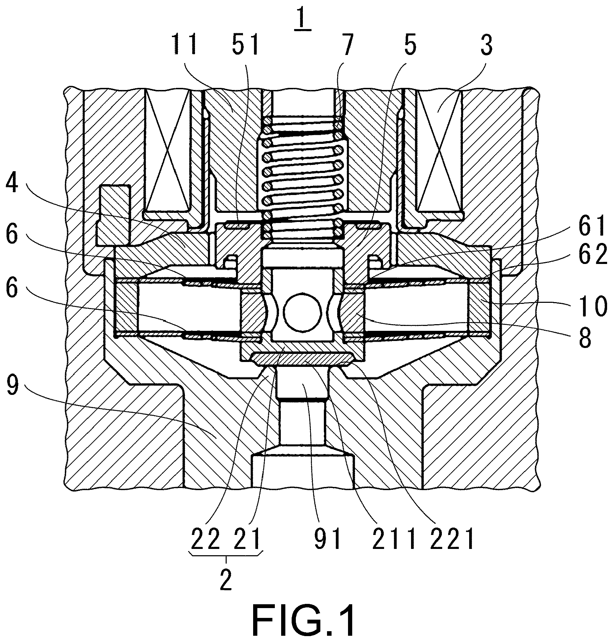

FIG. 1 is a vertical partial sectional view illustrating a valve-closed state of an injector in an embodiment in the present invention.

### DETAILED DESCRIPTION

In the following, a preferred embodiment of the present invention will be described in detail with reference to the drawing.

FIG. 1 is a view illustrating an outline of a vertical sectional part centering on an on-off valve 2, which includes a valve body 21 and a valve seated seat 22, of an electromagnetically-driven injector 1 that is a preferred embodiment of the present invention and that supplies fuel to a gas engine. The valve body 21 is movable towards and away from the valve seat 22 in a valve stroking direction. The valve stroking direction may also be called a first direction. When the valve body 21 contacts the valve seat 22 the on-off valve 2 is in a valve-closed state. When the valve body 21 is separated from the valve sear the on-off valve 2 is in a valve-open state. The injector 1 includes an electromagnetic coil 3, a lower plate 4, and a movable iron core 5. On a lower side (downstream side) of the movable iron core 5, the valve body 21 including a valve rubber 211 at a leading end is arranged. The movable iron core 5 and the valve body 21 are supported in a floating state by a pair of thin disk-shaped plate springs 6 and 6 arranged transverse to, in particular at a right angle to, in a valve stroking direction.

Then, each plate spring 6 includes a predetermined-shaped open part to let fuel pass through, a peripheral part thereof being fixed to a side of a main body 9 that forms a nozzle 91, and a central part thereof being displaced back and forth vertically by elastic deformation while supporting the movable iron core 5 on an upper side (upstream side) and supporting the valve body 21 on a lower side (downstream side). The plate spring 6 is pushed in a lower direction by a load of a coil spring 7, and the valve rubber 211 of the valve body 21 tightly contacts with a sealing surface 221 of the valve seated seat 22 and becomes a valve-closed state.

Note that in the present embodiment, the plate springs 6 and 6 are supported by being provided across the main body 9 and the valve body 21, which moves along with the movable iron core 5, with an inner periphery thereof being fixed to a hollow cylinder-shaped inner collar 8 arranged between the movable iron core 5 and the valve body 21, and an outer periphery thereof being fixed to a hollow cylinder-shaped outer collar 10 arranged between the main body 9 and the lower plate 4, and are arranged side by side at a predetermined distance from each other at a right angle in a valve stroking direction.

Also, similarly to the related art, the coil spring 7 is provided in the valve stroking direction on an upper side of the valve body 21 and is arranged in a state of being compressed vertically to bias the valve body 21 of the on-off valve 2 in a valve-closed direction.

Note that in the drawing, a reference sign 51 is a stopper rubber that is arranged on an upstream side of the movable iron core 5 and that is included to absorb impact of when the movable iron core 5 hits a bottom part of a fixed iron core 11 when the movable iron core 5 (valve body 21) is raised in opening of the valve.

Similarly to this kind of injector in the related art, the present embodiment having the above configuration sucks the movable iron core 5 by energizing and exciting the electromagnetic coil 3 and opens the on-off valve 2 against biasing force of the coil spring 7 and the plate springs 6 and 6. However, in the present embodiment, the valve body 21 is supported by the plurality of (two) plate springs 6 and 6 arranged at a predetermined distance.

Thus, unlike the plate spring structure in the related art in which structure one plate spring that supports a valve body only at one point of a central part is used, a valve body is supported by two plate springs 6 and 6 arranged at a predetermined distance. Thus, actuation does not become unstable due to various kinds of disturbance, the valve rubber 211 (or stopper rubber 51) is not worn unevenly when the valve is opened/closed, a displacement amount of the valve body 21 is not increased, and a stress applied to the plate springs 6 and 6 is not increased, whereby a situation that a function of the injector 1 is damaged does not occur.

In particular, in the present embodiment, an inner periphery 61 and an outer periphery 62 of each of the plate springs 6 and 6 are fixed to predetermined positions via the inner collar 8 and the outer collar 10. Thus, the plate springs 6 and 6 are securely supported in predetermined positions at a predetermined distance from each other at a right angle in the valve stroking direction, whereby spring actuation is secure, assembling is easy, and production can be performed quickly.

Note that in the present embodiment, the two plate springs 6 and 6 are used for reduction of the number of parts and simplification of a configuration. However, it is only necessary that there is a plurality of plate springs, and selection and utilization are performed arbitrarily depending on capacity of an employed injector 1, and a material, thickness, and the like of plate springs 6 and 6.

### CLAUSES:

1. An electromagnetically-driven injector in which a valve body of an on-off valve is biased in a valve-closed direction by a coil spring, which is arranged in a stroking direction of the valve body, and a plate spring, which is provided at a right angle in the stroking direction of the valve body and arranged in such a manner as to support the valve body, and keeps a valve-closed state when energization is not performed,
   wherein the plate spring includes a plurality of plate springs arranged in the stroking direction of the valve body.
2. The injector according to clause 1, wherein the plurality of plate springs is arranged at a predetermined distance from each other in the stroking direction of the valve body.
3. The injector according to clause 1 or 2, wherein the number of the plurality of plate springs is two.

## Claims

1. An electromagnetically-driven injector comprising:
an on-off valve, comprising a valve body moveable in a stroking direction towards and away from a valve seat between a valve-closed state and a valve-open state;
a coil spring extending in the stroking direction arranged to bias the valve body towards the valve seat in a valve-closed direction; and
a plurality of plate springs, extending transverse to the stroking direction and arranged to bias the valve body towards the valve seat.

2. The electromagnetically-driven injector according to claim 1, wherein each of the plurality of plate springs is arranged at a predetermined distance from another of the plurality of plate springs in the stroking direction.

3. The electromagnetically-driven injector according to claim 1 or 2, wherein the the plurality of plate springs comprises two plate springs.

4. The electromagnetically-driven injector of any preceding claim, wherein the plurality of plate springs are arranged to retain the valve body in the valve-closed state when no energy is supplied to the electromagnetically-driven injector.

5. The electromagnetically-driven injector of any preceding claim, wherein the plurality of plate springs extend at right angles to the stroking direction.
